# EUROPEAN PATENT SPECIFICATION

(11) **EP 1 172 784 B1**
(45) Date of publication and mention of the grant of the patent: **25.07.2007**
(21) Application number: 01830396.6
(22) Date of filing: 14.06.2001
(51) Int. Cl.: G09F 13/18, B60Q 1/50, B60Q 1/56

(54) **Lighting device usable for illuminating a panel or as a lamp for motor vehicles**
Beleuchtungseinricthung verwendbar als Anzeigetafelbeleuchtung oder als Lampe für Kraftfahrzeuge
Dispositif d'éclairage utilisable pour éclairer un panneau ou comme lampe pour véhicule automobile

(30) Priority: 30.06.2000 IT TO200647
(43) Date of publication of application: 16.01.2002
(73) Proprietor: C.R.F. SOCIETA' CONSORTILE PER AZIONI, 10043 Orbassano (Torino) (IT)
(72) Inventor: Bigliati, Claudia, 13039 Trino (Vercelli) (IT); Perlo, Piero, 12048 Sommariva Bosco (Cuneo) (IT); Repetto, Piermario, 10145 Torino (IT)
(74) Representative: Notaro, Giancarlo

(56) References cited:
- EP-A- 0 736 415
- EP-A- 0 942 225
- EP-A- 1 029 738
- DE-U- 20 004 188
- US-A- 4 929 866
- US-A- 5 136 483

## Description

The present invention relates to lighting devices, usable in particular for illuminating a panel or the like, or else as lamps for motor vehicles, of the type comprising at least one light source set adjacent to a side of the panel or of the transparent element of the lamp, and at least one reflecting surface adjacent to said light source, for reflecting the light rays emitted by the source onto a panel to be illuminated, or in the direction of the transparent element of the lamp. A device according to the preamble of claim 1 is known from US-A-4 929 866.

The purpose of the present invention is to provide a device of the type referred to above which will enable high and substantially uniform illumination of the entire surface of the panel or of the transparent element of the lamp, starting from one or more substantially punctiform light sources.

With a view to achieving the above purpose, the subject of the present invention is a lighting device having the features of claim 1.

In an example of embodiment, the aforesaid reflecting surface has a section in a vertical plane perpendicular to the plane of the panel to be illuminated or to the transparent element of the lamp that includes a first curved portion, closer to the light source, with the convexity facing the source, and a second curved portion, further away from the source, with the concavity facing the source.

Thanks to the characteristics mentioned above, the lighting device according to the invention is able to produce high and substantially uniform illumination over the entire surface of the panel or of the transparent element of the lamp, even though the light source is a point source. A further advantage of the invention lies in the fact that the reflecting surface, thanks to its conformation described above, can extend simply along one portion of the side of the panel adjacent to which the source is set, in so far as the lateral marginal areas of the panel are illuminated even though the reflecting surface does not extend along an entire side of the panel. This characteristic leads to obvious advantages in terms of simplicity, economy, and reduced overall dimensions of the device.

In a further embodiment, between the source and the panel to be illuminated there is set a diffractive optical element designed to broaden the light beam directed towards the panel further in the horizontal direction.

Further characteristics and advantages of the present invention will emerge from the ensuing description with reference to the attached drawings, which are provided purely by way of non-limiting examples and in which:
- Figure **1** is a schematic perspective view of a lighting device according to the invention;
- Figure **2** is a sectional view of the device of Figure 1, and also shows a diagram of the illuminance on the surface of the panel associated to the device according to the invention;
- Figure **3** is a front view of the panel of Figure 1 and includes a diagram of the illuminance over the panel;
- Figure **4** presents a diagram of the illuminance of the panel with the solution illustrated in Figures 1-3;
- Figure **5** illustrates a variant of Figure 2;
- Figure **6** is a variant of the diagram of Figure 4 and refers to the illuminance that may be obtained with the device of Figure 5;
- Figure **7** illustrates a further embodiment of the invention that refers to the application as a lamp for a motor vehicle;
- Figure **8** is a diagram representing the profile of a diffractive optical element of the type used in the device of Figure 7; and
- Figure **9** is a diagram showing the pattern of the relative intensity in the various orders of diffraction (and hence in the various angles of deviation) of the optical element to which the diagram of Figure 8 refers.

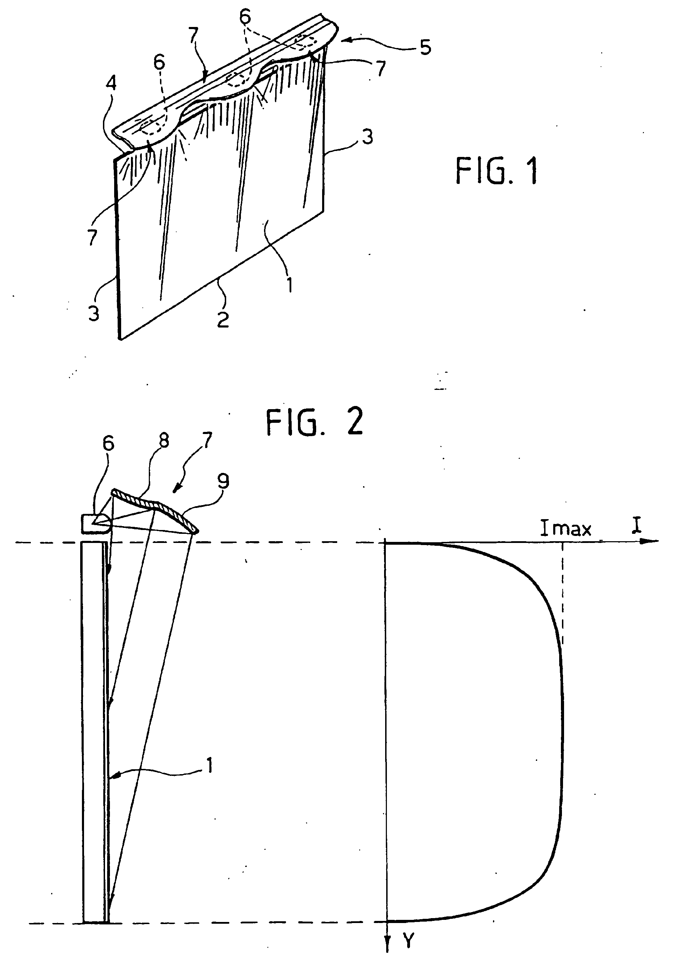

With reference to Figure 1, the number 1 designates, as a whole, a panel of any type (for example a panel for advertising purposes or a panel for road signs) having a bottom side or base 2, two vertical sides 3, and a top side 4 along which a lighting device 5 according to the invention is set. The said device includes one or more punctiform light sources 6 (in the example illustrated, three light sources are present), each consisting, for example, of a LED or laser lamp. Associated to each source 6 is a reflecting structure 7. In the example illustrated, the three reflecting structures 7 associated to the three sources 6 are integrated in a single structure, as may be clearly seen in Figure 1. The reflecting structure 7 associated to each point source 6 has its cross section, which may be seen in Figure 2, in a vertical plane perpendicular to the panel 1. The said section has a profile with a first portion 8, which is closer to the source 6 and is curved, with the convexity facing the panel 1, and a second portion 9, which is curved, with the concavity facing the panel 1. The above geometry enables a substantially uniform illumination of the entire surface of the panel in the vertical direction, as is clearly visible in the diagram in the right-hand part of Figure 2, which shows the value of the illuminance I over the surface of the panel in the vertical direction Y. As may be seen, the reduction in illuminance in the extreme top part and in the extreme bottom part of the panel 1 is limited to a very small area, so that the illuminance preserves its maximum value Iₘₐₓ over a substantial part of the surface of the panel.

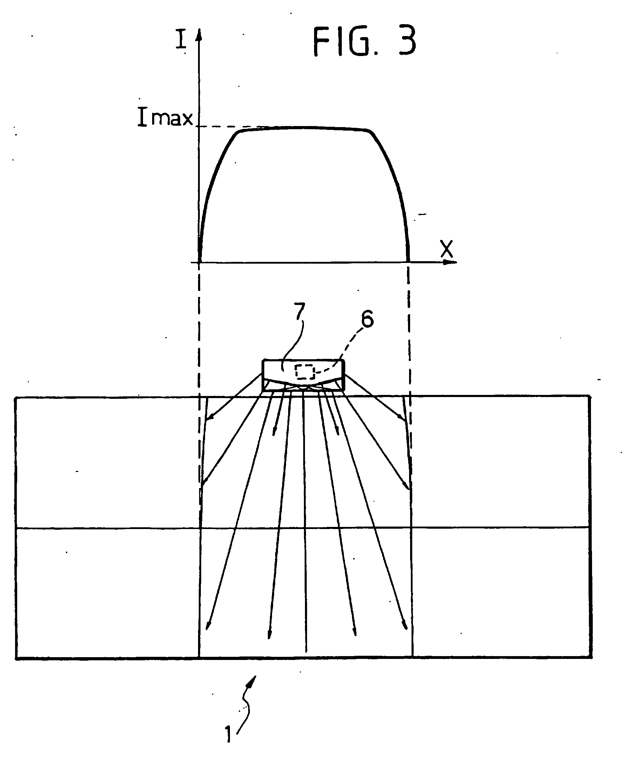

Each reflecting structure 7 has a section with a curved profile, convex towards the panel 1 also in any plane of section parallel to the panel 1. Thanks to this characteristic, the rays reflected by the reflecting structure 7 broaden out in the direction of the two sides of the panel, as is clearly illustrated in Figure 3. This enables a substantially uniform illumination in the horizontal direction of the surface of the panel associated to each source 6, as may be clearly seen from Figure 3, which includes, in its top part, a diagram that illustrates the variation in illuminance in the X direction. As may be seen, the decrease in illuminance at the two sides of the portion of the panel associated to each reflecting structure 7 is limited to an extremely small area, so that the illuminance preserves its maximum value Iₘₐₓ for a prevalent portion of the surface of the panel. Thanks to these characteristics, the reflecting structure 7 may extend only along a central portion of the top side of the portion of the panel 1 to which the source'6 is associated, as emerges clearly from Figure 3.

The device according to the invention therefore affords high-efficiency illumination of the panel to be illuminated, with a structure that is simple, inexpensive and of small size, starting from a substantially punctiform light source.

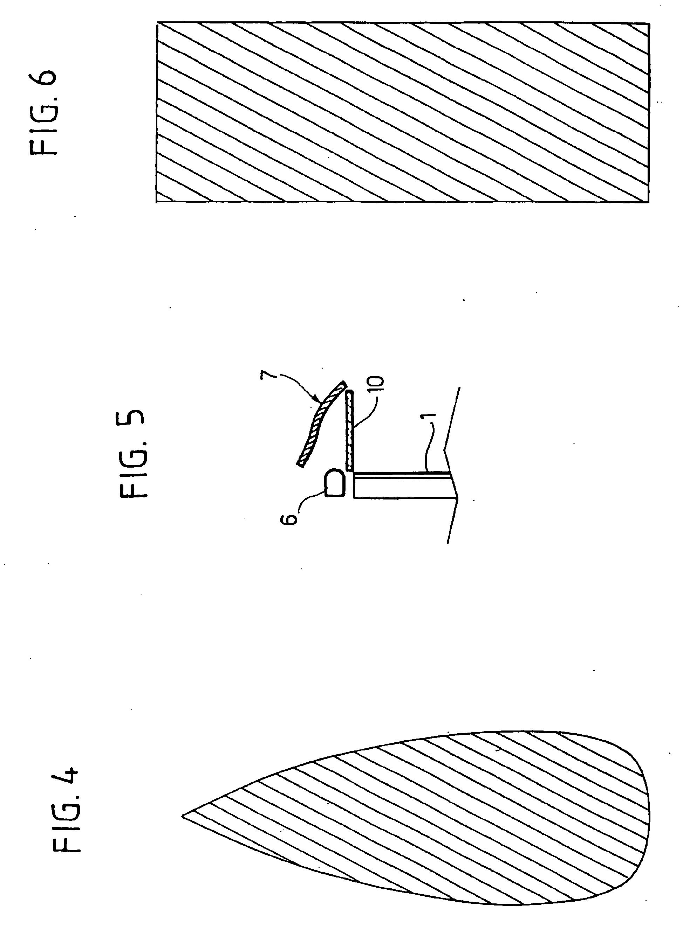

In greater detail, it must be borne in mind that the reflecting surface of the device according to the invention may also have a conformation different from the one illustrated, purely by way of example, in Figure 2. Basically, the principle underlying the invention is that of shaping the reflecting surface in such a way that the light rays coming from the source and contained in the solid angle subtended by each elementary portion of the reflecting surface are reflected onto the panel to be illuminated along a substantially horizontal strip. Portions of the reflecting surface located in different vertical positions give rise to a horizontal strip of luminous flux in a different vertical position. As a whole, the reflecting surface gives rise to an area of illuminance of the type illustrated in Figure 4. This area may, however, become of a constant vertical width, as illustrated in Figure 6, if the device of Figure 5 is adopted, where between the reflecting structure 6 and the panel 1 there is set a diffractive optical element having a conformation suitable for obtaining the result that may be seen in Figure 6.

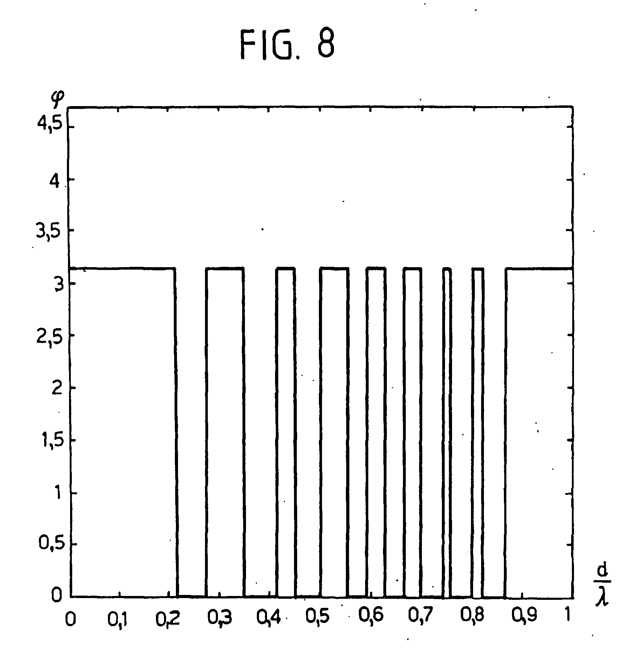

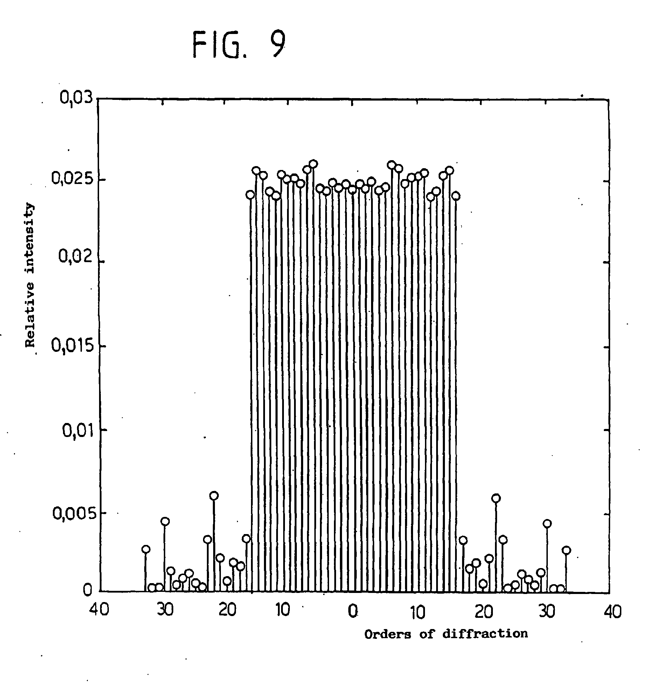

Figure 8 of the attached drawings illustrates the profile of a binary diffractive optical element for the conformation of the beam in the horizontal direction. Since it is a periodic system, only the pattern within one period is shown. In the diagram, appearing on the abscissa are the values of the ratio d/λ, where d is the period of the grating and λ is the wavelength of the incident radiation. Given on the ordinate are the values of the phase profile ϕ of the binary grating with thirty-three orders of diffraction. Figure 9 illustrates a diagram which represents the intensity corresponding to the orders of diffraction.

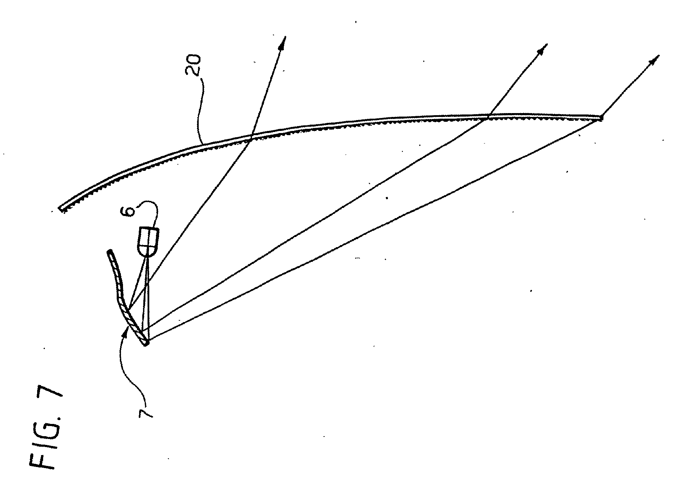

Finally, Figure 7 shows a second embodiment corresponding to the application as a lamp of a motor vehicle. In this case, the rays reflected by the surface 7 are directed towards the transparent element 20 of the lamp.

Of course, without prejudice to the principle of the invention, the details of construction and the embodiments may vary widely with respect to what is described and illustrated herein purely by way of example, without thereby departing from the scope of the present invention as defined by the appended claims.

## Claims

1. A lighting device usable, in particular for illuminating a panel or the like, or else as a lamp for motor vehicles, comprising at least one light source (6) set adjacent to one edge (4) of the panel (1) or of the transparent element (20) of the lamp, and at least one reflecting surface (7) adjacent to said light source (6), for reflecting the light rays emitted by source (6) onto the panel (1) to be illuminated, or towards the transparent element of a lamp, wherein the light source (6), or each light source (6), is a substantially point source, for example of the LED or laser type,
**characterized in that** said reflecting surface (7) is set along one edge (4) of the panel to be illuminated or of the transparent element (20) of the lamp and has a curved profile, with a convexity facing the source (6) in a sectional plane parallel to the panel (1) to be illuminated or to the transparent element (20) of the lamp, in such a way that the light rays coming from the source (6) and contained in the solid angle subtended by each elementary portion of the reflecting surface (7) are reflected by said reflecting surface onto the panel (1) to be illuminated or onto the transparent element (20) of the lamp along a substantially horizontal strip, in such a way that the area illuminated is substantially widened horizontally, even though the light source (6) is a point source.

2. The lighting device according to Claim 1, **characterized in that** the reflecting surface (7) has a cross section, in a vertical plane perpendicular to the plane of the panel (1) to be illuminated or to the transparent element (20) of the lamp, including a first curved portion (8), closer to the light source (6), with the convexity facing the source (6), and a second curved portion (9), further away from the light source (6), with the concavity towards the panel (1) to be illuminated or towards the transparent element (20) of the lamp.

3. The lighting device according to Claim 1, **characterized in that** it comprises a plurality of punctiform light sources (6) distributed along one side (4) of the panel (1) to be illuminated, and **in that** the reflecting surface (7) associated to each light source (6) extends only for a stretch of the adjacent edge (4) of the portion of the panel (1) to which the respective light source (6) is associated.

4. The lighting device according to Claim 3, **characterized in that** the reflecting surfaces (7) associated to the aforesaid light sources (6) are integrated in a single element set along one side (4) of the panel to be illuminated.

5. The lighting device according to Claim 1, **characterized in that** between the source (6) and the element to be illuminated there is set a diffractive optical element designed to broaden the light beam further in the horizontal direction.

## Patentansprüche

1. Beleuchtungsvorrichtung, die insbesondere verwendet werden kann, eine Anzeigetafel oder Ähnliches zu beleuchten, oder außerdem als eine Lampe für Kraftfahrzeuge verwendet werden kann, und die umfasst:
wenigstens eine Lichtquelle (6), die angrenzend an einen Rand (4) der Anzeigetafel (1) oder des transparenten Elements (20) der Lampe angebracht ist; und
wenigstens eine an die Lichtquelle (6) angrenzende Reflexionsfläche (7) zum Reflektieren der von Quelle (6) auf die zu beleuchtende Anzeigetafel (1) oder in Richtung des transparenten Elements einer Lampe ausgestrahlten Lichtstrahlen, wobei die Lichtquelle (6) oder jede Lichtquelle (6) eine im Wesentlichen punktförmige Quelle ist, zum Beispiel vom LED- oder Lasertyp,
**dadurch gekennzeichnet, dass**
die Reflexionsfläche (7) entlang eines Randes (4) der zu beleuchtenden Anzeigetafel oder des transparenten Elements (20) der Lampe angebracht ist und ein gekrümmtes Profil aufweist, wobei die Wölbung der Quelle (6) in einer zu der zu beleuchtenden Anzeigetafel (1) oder zum transparenten Element (20) der Lampe parallelen Abschnittsfläche gegenüber liegt, und dies auf eine solche Weise, dass die von der Quelle (6) ausgehenden und im jedem elementaren Abschnitt der Reflexionsfläche (7) gegenüber liegenden festen Winkel aufgenommenen Lichtstrahlen von der Reflexionsfläche auf die zu beleuchtende Anzeigetafel (1) oder auf das transparente Element (20) der Lampe entlang eines im Wesentlichen horizontalen Streifens reflektiert werden, und dies auf eine solche Weise, dass der beleuchtete Bereich im Wesentlichen horizontal verbreitert wird, selbst wenn die Lichtquelle (6) eine punktförmige Quelle ist.

2. Beleuchtungsvorrichtung nach Anspruch 1, **dadurch gekennzeichnet, dass** die Reflexionsfläche (7) einen Querschnitt in einer zur Fläche der zu beleuchtenden Anzeigetafel (1) oder zum transparenten Element (20) der Lampe senkrechten Ebene aufweist und umfasst:
ein erstes gekrümmtes Teilstück (8), das sich näher an der Lichtquelle (6) befindet, und dessen Wölbung der Quelle (6) gegenüber liegt, und
ein zweites gekrümmtes Teilstück (9), das sich weiter entfernt von der Lichtquelle (6) befindet, und dessen Rundhöhlung in Richtung der zu beleuchtenden Anzeigetafel (1) oder in Richtung des transparenten Elements (20) der Lampe liegt.

3. Beleuchtungsvorrichtung nach Anspruch 1, **dadurch gekennzeichnet, dass** sie eine Vielzahl von punktförmigen Lichtquellen (6), die entlang einer Seite (4) der zu beleuchtenden Anzeigetafel (1) verteilt sind, umfasst, und dass
sich die jeder Lichtquelle (6) zugehörige Reflexionsfläche (7) nur über eine Strecke des benachbarten Randes (4) des Teilstücks der Anzeigetafel (1), welcher die jeweilige Lichtquelle (6) zugehört, erstreckt.

4. Beleuchtungseinrichtung nach Anspruch 3, **dadurch gekennzeichnet, dass** die mit den oben erwähnten Lichtquellen (6) verbundenen Reflexionsflächen (7) in einem einzigen Element integriert sind, welches entlang einer Seite (4) der zu beleuchtenden Anzeigetafel eingerichtet ist.

5. Beleuchtungseinrichtung nach Anspruch 1, **dadurch gekennzeichnet, dass** zwischen der Quelle (6) und dem zu beleuchtenden Teil ein beugendes optisches Element angebracht ist, das so konstruiert ist, dass es den Lichtstrahl weiter in der horizontalen Richtung verbreitert.

## Revendications

1. Dispositif d'éclairage utilisable en particulier pour éclairer un panneau ou analogue ou sinon, comme lampe pour des véhicules à moteur, comprenant au moins une source de lumière (6) disposée de manière adjacente à un bord (4) du panneau (1) ou de l'élément transparent (20) de la lampe, et au moins une surface réfléchissante (7) adjacente à ladite source de lumière (6), pour réfléchir les rayons lumineux émis par la source (6) sur le panneau (1) à éclairer, ou vers l'élément transparent d'une lampe, dans lequel la source de lumière (6) ou chaque source de lumière (6) est une source sensiblement ponctuelle, par exemple du type à LED ou à laser,
**caractérisé en ce que** ladite surface réfléchissante (7) est disposée le long d'un bord (4) du panneau à éclairer ou de l'élément transparent (20) de la lampe et présente un profil incurvé, avec une convexité tournée vers la source (6) dans un plan de coupe parallèle au panneau (1) à éclairer ou par rapport à l'élément transparent (20) de la lampe, de telle sorte que les rayons lumineux provenant de la source (6) et contenus dans l'angle solide sous-tendu par chaque partie élémentaire de la surface réfléchissante (7) soient réfléchis par ladite surface réfléchissante sur le panneau (1) à éclairer ou sur l'élément transparent (20) de la lampe le long d'une bande sensiblement horizontale, de telle sorte que la zone éclairée soit sensiblement élargie horizontalement, même si la source de lumière (6) est une source ponctuelle.

2. Dispositif d'éclairage selon la revendication 1, **caractérisé en ce que** la surface réfléchissante (7) a une section transversale, dans un plan vertical perpendiculaire au plan du panneau (1) à éclairer ou par rapport à l'élément transparent (20) de la lampe, incluant une première partie incurvée (8), plus proche de la source de lumière (6), la convexité étant tournée vers la source (6), et une seconde partie incurvée (9), plus éloignée de la source de lumière (6), avec la concavité vers le panneau (1) à éclairer, ou vers l'élément transparent (20) de la lampe.

3. Dispositif d'éclairage selon la revendication 1, **caractérisé en ce qu'**il comprend une pluralité de sources de lumière ponctuelles (6) réparties le long d'une face (4) du panneau (1) à éclairer, et **en ce que** la surface réfléchissante (7) associée à chaque source de lumière (6) s'étend seulement sur une extension du bord adjacent (4) de la partie du panneau (1) à laquelle est associée la source de lumière respective (6).

4. Dispositif d'éclairage selon la revendication 3, **caractérisé en ce que** les surfaces réfléchissantes (7) associées aux sources de lumière susdites (6) sont intégrées en un élément unique disposé le long d'une face (4) du panneau à éclairer.

5. Dispositif d'éclairage selon la revendication 1, **caractérisé en ce que**, entre la source (6) et l'élément à éclairer, est disposé un élément optique diffractif conçu pour élargir davantage le faisceau lumineux dans la direction horizontale.
